# EUROPEAN PATENT APPLICATION

(11) **EP 4 682 684 A1**
(43) Date of publication of application: **21.01.2026**
(21) Application number: 25187673.6
(22) Date of filing: 04.07.2025
(51) Int. Cl.: G06F 3/01

(54) **SYSTEMS, APPARATUSES, METHODS, AND COMPUTER PROGRAM PRODUCTS FOR DISPLAY STABILIZATION**

(30) Priority: 18.07.2024 IN 202411054933; 21.10.2024 US 202418921899
(71) Applicant: HONEYWELL INTERNATIONAL INC., Charlotte, NC 28202 (US)
(72) Inventor: J, Kirupakar, Charlotte, 28202 (US); KHAN, Kalimulla, Charlotte, 28202 (US); RAJENDRAN, Ramkumar, Charlotte, 28202 (US); LEIPHON, Kenneth M., Charlotte, 28202 (US)
(74) Representative: Haseltine Lake Kempner LLP

(57) **Abstract**

Systems, apparatuses, methods, and computer program products are provided herein. For example, a method may include identifying head mounted display scene data associated with a head mounted display. In some embodiments, the method includes capturing head mounted display motion data using one or more sensing components associated with the head mounted display. In some embodiments, the method includes generating scene stability adjustment data by applying the head mounted display motion data to a scene motion stabilization model. In some embodiments, the method includes generating a stabilized head mounted display scene based on the scene stability adjustment data and the head mounted display scene data. In some embodiments, the method includes causing the stabilized head mounted display scene to be rendered to a head mounted display interface.

## Description

### CROSS REFERENCE TO RELATED APPLICATIONS

This application claims the benefit of U.S. Provisional Patent Application No. 63/593,860, filed October 27, 2023 and India Provisional Patent Application No. 202411054933, filed July 18, 2024, the entire contents of which are incorporated by reference herein.

### TECHNOLOGICAL FIELD

Embodiments of the present disclosure relate generally to systems, apparatuses, methods, and computer program products for display stabilization.

### BACKGROUND

Applicant has identified many technical challenges and difficulties associated with head mounted displays. Through applied effort, ingenuity, and innovation, Applicant has solved problems related to head mounted displays by developing solutions embodied in the present disclosure, which are described in detail below.

### BRIEF SUMMARY

Various embodiments described herein relate to systems, apparatuses, methods, and computer program products for display stabilization.

In accordance with one aspect of the disclosure, a method is provided. In some embodiments, the method includes identifying head mounted display scene data associated with a head mounted display. In some embodiments, the method includes capturing head mounted display motion data using one or more sensing components associated with the head mounted display. In some embodiments, the method includes generating scene stability adjustment data by applying the head mounted display motion data to a scene motion stabilization model. In some embodiments, the method includes generating a stabilized head mounted display scene based on the scene stability adjustment data and the head mounted display scene data. In some embodiments, the method includes causing the stabilized head mounted display scene to be rendered to a head mounted display interface. In some embodiments, the stabilized head mounted display scene is rendered at a stabilized rendering position on the head mounted display interface.

In some embodiments, the head mounted display interface is provided on a display panel of the head mounted display.

In some embodiments, the head mounted display motion data comprises surrounding environment data representative of an environment surrounding a user of the head mounted display during a motion event.

In some embodiments, the head mounted display motion data comprises user input and movement data representative of an input by a user of the head mounted display during a motion event.

In some embodiments, the head mounted display motion data comprises eye tracking data representative of movement of an eye of a user of the head mounted display during a motion event.

In some embodiments, generating the scene stability adjustment data further comprises applying external data to the scene motion stabilization model.

In some embodiments, the scene motion stabilization model is configured to perform a drift correction operation.

In some embodiments, the scene motion stabilization model comprises a vestibulo-ocular reflex model.

In some embodiments, the method includes processing the stabilized head mounted display scene using one or more image processing techniques.

In some embodiments, the one or more sensing components include one or more of a gesture recognition component, a head tracking component, or a positional component.

In some embodiments, at least one of the one or more sensing components is external to the head mounted display.

In some embodiments, the method includes identifying head mounted display operations data.

In some embodiments, the method includes generating a head mounted display scene based on the head mounted display operations data.

In some embodiments, the method includes causing the head mounted display scene to be rendered to the head mounted display interface.

In some embodiments, the head mounted display scene is rendered at an original rendering position on the head mounted display interface.

In some embodiments, the scene stability adjustment data is representative of an estimated position change of an eye gaze of a user of the head mounted display.

In some embodiments, the scene stability adjustment data is representative of an estimated position change of the head mounted display.

In accordance with another aspect of the disclosure, an apparatus is provided. In some embodiments, the apparatus includes memory and one or more processors communicatively coupled to the memory. In some embodiments, the one or more processors are configured to identify head mounted display scene data associated with a head mounted display. In some embodiments, the one or more processors are configured to capture head mounted display motion data using one or more sensing components associated with the head mounted display. In some embodiments, the one or more processors are configured to generate scene stability adjustment data by applying the head mounted display motion data to a scene motion stabilization model. In some embodiments, the one or more processors are configured to generate a stabilized head mounted display scene based on the scene stability adjustment data and the head mounted display scene data. In some embodiments, the one or more processors are configured to cause the stabilized head mounted display scene to be rendered to a head mounted display interface. In some embodiments, the stabilized head mounted display scene is rendered at a stabilized rendering position on the head mounted display interface.

In some embodiments, the scene stability adjustment data is representative of an estimated position change of an eye gaze of a user of the head mounted display.

In some embodiments, the scene stability adjustment data is representative of an estimated position change of the head mounted display.

In some embodiments, the scene motion stabilization model comprises a vestibulo-ocular reflex model.

In some embodiments, at least one of the one or more sensing components is external to the head mounted display.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for identifying head mounted display scene data associated with a head mounted display. In some embodiments, the computer program code, in execution with at least one processor, configures the computer program product for capturing head mounted display motion data using one or more sensing components associated with the head mounted display. In some embodiments, the computer program code, in execution with at least one processor, configures the computer program product for generating scene stability adjustment data by applying the head mounted display motion data to a scene motion stabilization model. In some embodiments, the computer program code, in execution with at least one processor, configures the computer program product for generating a stabilized head mounted display scene based on the scene stability adjustment data and the head mounted display scene data. In some embodiments, the computer program code, in execution with at least one processor, configures the computer program product for causing the stabilized head mounted display scene to be rendered to a head mounted display interface. In some embodiments, the stabilized head mounted display scene is rendered at a stabilized rendering position on the head mounted display interface.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example diagram of an environment in which embodiments of the present disclosure may operate;
FIG. 2 illustrates an example block diagram of an example apparatus that may be specially configured in accordance with an example embodiment of the present disclosure;
FIG. 3 illustrates an example architecture of a head mounted display in an accordance with an example embodiment of the present disclosure;
FIG. 4 illustrates a head mounted display interface in accordance with one or more embodiments of the present disclosure;
FIG. 5 illustrates a head mounted display interface in accordance with one or more embodiments of the present disclosure;
FIG. 6 illustrates a flowchart of an example method in accordance with one or more embodiments of the present disclosure; and
FIG. 7 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with unstable head mounted display scenes on head mounted displays. As would be understood by one skilled in the field to which this disclosure pertains, there are numerous example scenarios in which head mounted display scenes are desirable.

In many applications it may be desirable to use head mounted display scenes, such as using head mounted display scenes on head mounted displays to perform a variety of activities. For example, it may be desirable to use head mounted display scenes on head mounted displays to perform navigational activities, informational activities, interactive activities, assembly activities, maintenance activities, medical activities, repair activities, and/or the like. In some implementations, head mounted display scenes and/or users associated with head mounted display scenes are impacted by motion events. For example, head mounted display scenes and/or users associated with head mounted display scenes may be impacted by motion events that include movement of a head mounted displayed and/or movement of a user associated with a head mounted display.

In some implementations, a motion event may decrease the usefulness of head mounted display scenes because such head mounted display scenes become unstable (e.g., a head mounted display scenes may shake and/or blur due to a motion event). For example, a motion event may cause head mounted display scenes to become unstable such that information displayed on the head mounted display scene is not readable by a user of a head mounted display. As another example, a motion event may cause head mounted display scenes to become unstable such that a user of a head mounted display is unable to use head mounted display scenes to perform a variety of activities using a head mounted display. As another example, a motion event may cause head mounted display scenes to become unstable such that a user of a head mounted display is affected by motion sickness due to the shaking and/or blurring of the head mounted display scenes. Accordingly, there is a need for systems, apparatuses, methods, and computer program products for generating a stabilized head mounted display scenes even when head mounted display scenes and/or users associated with head mounted display scenes are impacted by motion event.

Thus, to address these and/or other issues related to head mounted display scenes, example systems, apparatuses, methods, and computer program products for generating a stabilized head mounted display scene are disclosed herein. For example, an embodiment in this disclosure, described in greater detail below, includes a method that includes identifying head mounted display scene data associated with a head mounted display. In some embodiments, the method includes capturing head mounted display motion data using one or more sensing components associated with the head mounted display. In some embodiments, the method includes generating scene stability adjustment data by applying the head mounted display motion data to a scene motion stabilization model. In some embodiments, the method includes generating a stabilized head mounted display scene based on the scene stability adjustment data and the head mounted display scene data. In some embodiments, the method includes causing the stabilized head mounted display scene to be rendered to a head mounted display interface. In some embodiments, the stabilized head mounted display scene is rendered at a stabilized rendering position on the head mounted display interface. Accordingly, the systems, apparatuses, methods, and computer program products for a stabilized head mounted display scene provided herein enable a stabilized head mounted display scenes even when head mounted display scenes and/or users associated with head mounted display scenes are impacted by a motion event.

### Example Systems and Apparatuses

Embodiments of the present disclosure herein include systems, apparatuses, methods, and computer program products configured for display stabilization. It should be readily appreciated that the embodiments of the apparatus, systems, methods, and computer program product described herein may be configured in various additional and alternative manners in addition to those expressly described herein.

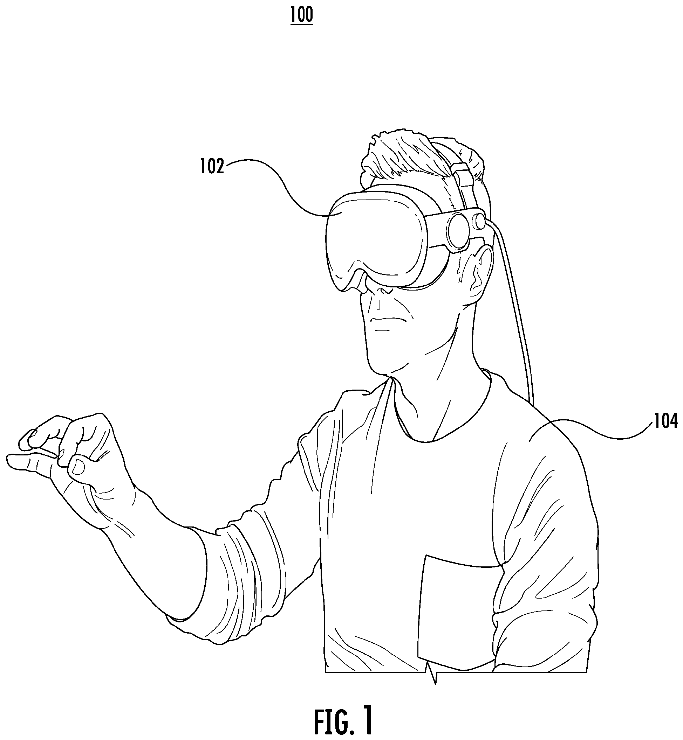

FIG. 1 illustrates an environment 100 in which embodiments of the present disclosure may operate. Specifically, FIG. 1 illustrates a head mounted display 102. In some embodiments, the environment 100 includes a user 104. In some embodiments, the user 104 is an individual who uses the head mounted display 102. In this regard, for example, the head mounted display 102 may be a device that provides the user 104 with a display that includes real-world images, virtual reality images, augmented reality images, mixed reality images, and/or the like.

In some embodiments, the head mounted display 102 is associated with a determinable location. The determinable location of the head mounted display 102 in some embodiments represents an absolute position (e.g., GPS coordinates, latitude and longitude locations, a home location, and/or the like) or a relative position of the head mounted display 102 (e.g., an identifier representing the location of the head mounted display 102 as compared to one or more other head mounted displays, a home location (e.g., a location where the head mounted display 102 is stored) or general description in the world for example based at least in part on continent, state, ocean, or other definable region). In some embodiments, the head mounted display 102 includes or otherwise is associated with a location sensor and/or software-driven location services that provide the location data corresponding to the head mounted display 102. In other embodiments, the location of the head mounted display 102 is stored and/or otherwise determinable to one or more systems.

In some embodiments, the head mounted display 102 is electronically and/or communicatively coupled to one or more other devices, such as a display device (e.g., a television, a cloud computing device (e.g., a server that provides content to the head mounted display 102), a local computing device, and/or other head mounted displays. In some embodiments, the head mounted display 102 is located remotely from the one or more other devices and is electronically and/or communicatively coupled to the one or more other devices via a network. Additionally, or alternatively, the head mounted display 102 is located in proximity to the one or more other devices and is electronically and/or communicatively coupled to the one or more other devices via a network (e.g., a short-range network) and/or by one or more physical connections. In some embodiments, the head mounted display 102 is configured via hardware, software, firmware, and/or a combination thereof, to perform data intake of one or more types of data, such as head mounted display scene data, head mounted display motion data, scene stability adjustment data, surrounding environment data, user input and movement data, eye tracking data, external data, head mounted display operations data, head mounted display operations data, and/or the like.

Additionally, or alternatively, in some embodiments, the head mounted display 102 is configured via hardware, software, firmware, and/or a combination thereof, to generate and/or transmit command(s) that control, adjust, or otherwise impact operations of one or more of the one or more other devices. Additionally, or alternatively, in some embodiments, the head mounted display 102 is configured via hardware, software, firmware, and/or a combination thereof, to perform data reporting, provide data, and/or other data output process(es) associated with monitoring or otherwise analyzing operations of the one or more other devices. For example, in various embodiments, the head mounted display 102 may be configured to execute and/or perform one or more operations and/or functions described herein.

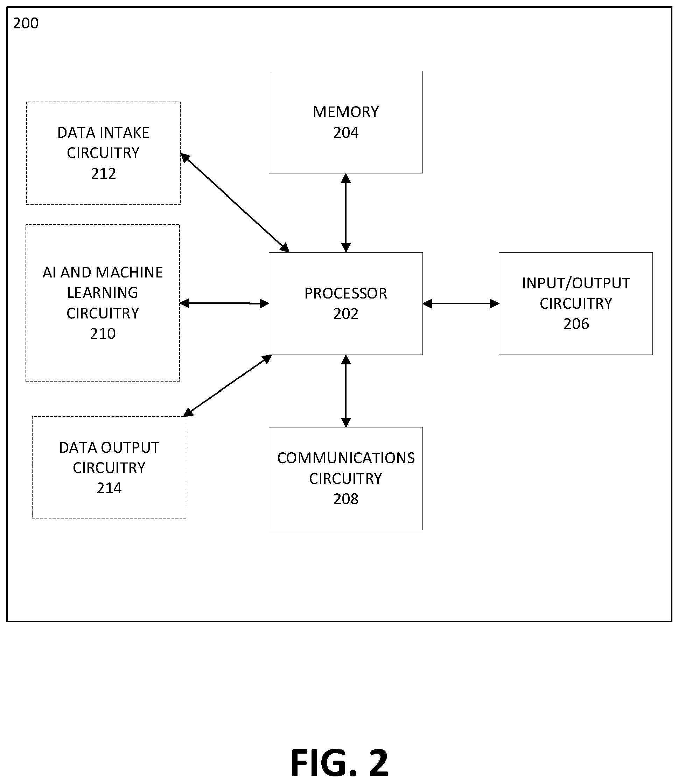

FIG. 2 illustrates an example block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, the head mounted display 102. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the head mounted display 102 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the head mounted display 102. In some embodiments, the data intake circuitry 212 includes hardware, software, firmware, and/or a combination thereof, that communicates with one or more sensor(s) component(s), and/or the like within the head mounted display 102 to receive particular data associated with such operations of the head mounted display 102. Additionally, or alternatively, in some embodiments, the data intake circuitry 212 includes hardware, software, firmware, and/or a combination thereof, that retrieves particular data associated with the head mounted display 102 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

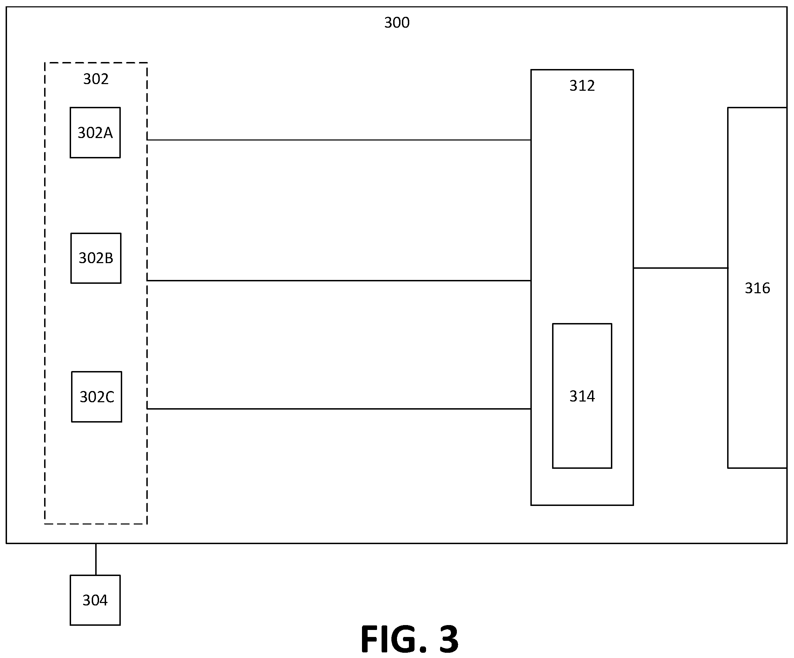

FIG. 3 includes an architecture 300 of the head mounted display 102. In some embodiments, the head mounted display 102 is configured to identify head mounted display operations data. In some embodiments, head mounted display operations data includes one or more items of data representative and/or indicative of one or more activities that are being performed using the head mounted display 102. In this regard, for example, head mounted display operations data may include one or more items of data representative and/or indicative of navigational activities that are being performed using the head mounted display 102 (e.g., viewing an interactive map using the head mounted display 102). As another example, head mounted display operations data may include one or more items of data representative and/or indicative of informational activities that are being performed using the head mounted display 102 (e.g., watching a video using the head mounted display 102). As another example, head mounted display operations data may include one or more items of data representative and/or indicative of assembly activities that are being performed using the head mounted display 102 (e.g., assembly an item from one or more components using instructions provided by the head mounted display 102).

As another example, head mounted display operations data may include one or more items of data representative and/or indicative of maintenance activities that are being performed using the head mounted display 102 (e.g., performing maintenance on an item using instructions provided by the head mounted display 102). As another example, head mounted display operations data may include one or more items of data representative and/or indicative of medical activities that are being performed using the head mounted display 102 (e.g., performing a medical procedure using instructions provided by the head mounted display 102). As another example, head mounted display operations data may include one or more items of data representative and/or indicative of repair activities that are being performed using the head mounted display 102 (e.g., repairing an item using instructions provided by the head mounted display 102). Said differently, in some embodiments, the one or more activities that are being performed using the head mounted display 102 are associated with a real-world environment, a virtual reality environment, an augmented reality environment, a mixed reality environment, and/or the like through which performance of an activity is facilitated.

In some embodiments, identifying head mounted display operations data includes the head mounted display 102 being configured to receive the head mounted display operations data. For example, the head mounted display 102 may be configured to receive head mounted display operations data from one or more external data sources (e.g., an external database). As another example, the head mounted display 102 may be configured to receive head mounted display operations data from one or more other devices communicatively coupled to the head mounted display 102. As another example, the head mounted display 102 may be configured to receive head mounted display operations data from the user 104. In some embodiments, identifying head mounted display operations data includes the head mounted display 102 being configured to generate head mounted display operations data. For example, the head mounted display 102 may be configured to generate head mounted display operations data using one or more sensing components 302 of the head mounted display 102.

In some embodiments, the head mounted display 102 is configured to generate a head mounted display scene 402. For example, the head mounted display 102 may be configured to generate the head mounted display scene 402 using an operations component 312. In some embodiments, the head mounted display scene 402 is generated based on head mounted display operations data. In this regard, in some embodiments, the head mounted display scene 402 includes one or more visual representations associated with the one or more activities that are being performed using the head mounted display 102. For example, the head mounted display scene 402 may include one or more visual representations associated with one or more navigational activities. As another example, the head mounted display scene 402 may include one or more visual representations associated with one or more informational activities. As another example, the head mounted display scene 402 may include one or more visual representations associated with one or more interactive activities. As another example, the head mounted display scene 402 may include one or more visual representations associated with one or more assembly activities. As another example, the head mounted display scene 402 may include one or more visual representations associated with one or more maintenance activities. As another example, the head mounted display scene 402 may include one or more visual representations associated with one or more medical activities. As another example, the head mounted display scene 402 may include one or more visual representations associated with one or more repair activities.

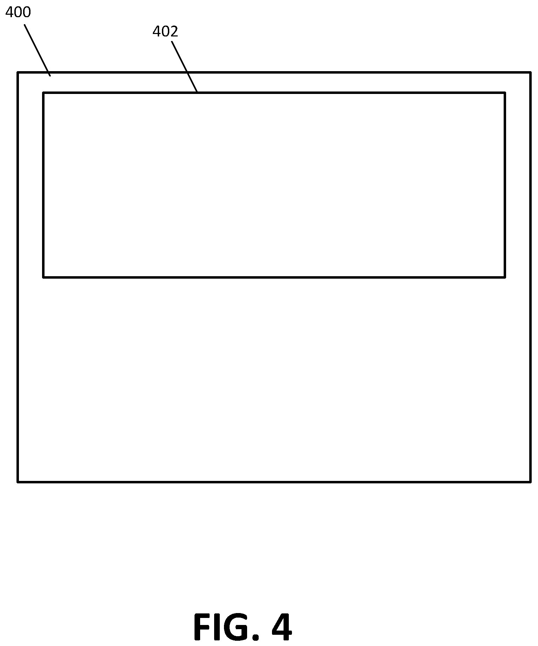

In some embodiments, the head mounted display 102 is configured to cause the head mounted display scene 402 to be rendered to a head mounted display interface 400, such as illustrated in FIG. 4. In some embodiments, the head mounted display interface 400 is provided on a display panel 316 of the head mounted display 102. In this regard, for example, the user 104 may be able to view the head mounted display scene 402 via the display panel 316.

In some embodiments, the head mounted display scene 402 is associated with an original rendering position. In some embodiments, the head mounted display scene 402 is rendered to the head mounted display interface 400 such that the head mounted display scene 402 is positioned at the original rendering position on the head mounted display interface 400. In this regard, in some embodiments, the original rendering position is a position on the head mounted display interface 400 at which the head mounted display scene 402 is displayed and/or located on the head mounted display interface 400. In some embodiments, the head mounted display 102 is configured such that the head mounted display interface 400 is visible to the user 104 when the user 104 is wearing the head mounted display 102.

In some embodiments, the head mounted display 102 is configured to identify head mounted display scene data. In some embodiments, head mounted display scene data includes one or more items of data representative and/or indicative of the head mounted display scene 402. In this regard, for example, head mounted display scene data may include one or more items of data representative and/or indicative of the visual representations of the one or more activities that are being performed using the head mounted display 102.

In some embodiments, identifying head mounted display scene data includes the head mounted display 102 being configured to receive head mounted display scene data. For example, the head mounted display 102 may be configured to receive head mounted display scene data from the display panel 316. As another example, the head mounted display 102 may be configured to receive head mounted display scene data from one or more external data sources (e.g., an external database). As another example, the head mounted display 102 may be configured to receive head mounted display scene data from one or more other devices communicatively coupled to the head mounted display 102. As another example, the head mounted display 102 may be configured to receive head mounted display scene data from the user 104.

In some embodiments, identifying head mounted display scene data includes the head mounted display 102 being configured to generate head mounted display scene data. For example, the head mounted display 102 may be configured to generate head mounted display scene data using the one or more sensing components 302 and/or the operations component 312. As another example, the head mounted display 102 may be configured to generate head mounted display scene data using head mounted display operations data.

In some embodiments, the head mounted display 102 is configured to capture head mounted display motion data. In some embodiments, head mounted display motion data includes one or more items of data representative of and/or indicative of a motion event associated with the head mounted display 102. In some embodiments, a motion event is an event in which the head mounted display 102 is moved when it is being used by the user 104. In this regard, for example, a motion event may be an event in which the head mounted display 102 is associated with acceleration motion (e.g., motion in an X, Y, and/or Z axis) and/or angular motion (e.g., azimuth, elevation, and/or roll motion) when it is being used by the user 104. Additionally, or alternatively, a motion event is an event in which the user 104 moves when the user 104 is using the head mounted display 102. In this regard, for example, a motion event may be an event in which the user 104 is associated with acceleration motion (e.g., motion in an X, Y, and/or Z axis) and/or angular motion (e.g., azimuth, elevation, and/or roll motion) when the user 104 is using the head mounted display 102. In some embodiments, head mounted display motion data is captured using the one or more sensing components 302.

In some embodiments, the head mounted display motion data includes surrounding environment data. In some embodiments, surrounding environment data includes one or more items of data representative and/or indicative of an environment surrounding the user 104. In some embodiments, surrounding environment data includes one or more items of data representative and/or indicative of an environment surrounding the user 104 during a motion event. For example, surrounding environment data may include one or more items of data representative of and/or indicative of a room in which the user 104 is located when using the head mounted display 102. As another example, surrounding environment data may include one or more items of data representative and/or indicative of one or more objects near the user 104 when the user is using the head mounted display 102.

In some embodiments, surrounding environment data is captured using the one or more sensing components 302. In this regard, in some embodiments, the one or more sensing components 302 include one or more surrounding environment sensors 302B. In some embodiments, the one or more surrounding environment sensors 302B are configured to capture and/or track the environment surrounding the user 104, such as during a motion event. For example, the one or more surrounding environment sensors 302B may include a camera component configured to capture and/or track an environment surrounding the user 104. As another example the one or more surrounding environment sensors 302B may include a lidar component configured to capture and/or track an environment surrounding the user 104. As another example, the one or more surrounding environment sensors 302B may include a depth component (e.g., a true depth camera) configured to capture and/or track an environment surrounding the user 104. As another example, the one or more surrounding environment sensors 302B may include a microphone component configured to capture and/or track an environment surrounding the user 104. As another example, the one or more surrounding environment sensors 302B may include a gyroscope component configured to capture and/or track an environment surrounding the user 104. As another example, the one or more surrounding environment sensors 302B may include an accelerometer component configured to capture and/or track an environment surrounding the user 104. As another example, the one or more surrounding environment sensors 302B may include an inertial measurement unit (IMU) component configured to capture and/or track an environment surrounding the user 104. As another example, the one or more surrounding environment sensors 302B may include a radar component configured to capture and/or track an environment surrounding the user 104 (e.g., a millimeter wave-based radar).

In some embodiments, the head mounted display motion data includes user input and movement data. In some embodiments, user input and movement data includes one or more items of data representative and/or indicative of inputs and movements associated with the user 104. For example, user input and movement data includes one or more items of data representative and/or indicative of inputs provided by the user 104 and/or movements made by the user 104. In some embodiments, user input and movement data includes one or more items of data representative and/or indicative of inputs and movements associated with the user 104 during a motion event. For example, user input and movement data may include one or more items of data representative of and/or indicative of inputs and movements associated with the user 104 when using the head mounted display 102. In this regard, for example, user input and movement data may include one or more items of data representative of and/or indicative of inputs and movements associated with the user 104 when using the head mounted display 102 to perform a maintenance activity.

In some embodiments, user input and movement data is captured using the one or more sensing components 302. In this regard, in some embodiments, the one or more sensing components 302 include one or more user input and movement sensors 302C. In some embodiments, the one or more user input and movement sensors 302C are configured to capture and/or track inputs and movements of the user 104, such as during a motion event. For example, the one or more user input and movement sensors 302C may include a controller component configured to capture and/or track inputs and movements of the user 104. In this regard, for example, the controller component may include a handheld devices with buttons, triggers, and joysticks for interacting with virtual objects, visual representations, and/or the like rendered in the head mounted display scene 402. As another example, the one or more user input and movement sensors 302C may include a gesture recognition component configured to capture and/or track inputs and movements of the user 104. In this regard, for example, the gesture recognition component may be configured to recognize hand gestures or movements made be the user 104. As another example, the one or more user input and movement sensors 302C may include a microphone component configured to capture and/or track inputs and movements of the user 104. In this regard, for example, the microphone component may enable the user 104 to perform hands free interaction with the head mounted display 102. As another example, the one or more user input and movement sensors 302C may include a head tracking component configured to capture and/or track inputs and movements of the head of the user 104. In this regard, for example, the head tracking component may include one or more gyroscopes, inertial measurement units (IMU), and/or accelerometers that track the head movements of the user 104 in real-time. As another example, the one or more user input and movement sensors 302C may include a positional component configured to capture and/or track inputs and movements of the user 104.

In some embodiments, the head mounted display motion data includes eye tracking data. In some embodiments, eye tracking data includes one or more items of data representative and/or indicative eye movements of user 104. In some embodiments, eye tracking data includes one or more items of data representative and/or indicative of eye movements of the user 104 during a motion event. For example, eye tracking data may include one or more items of data representative of and/or indicative of eye movements of the user 104 when using the head mounted display 102.

In some embodiments, eye tracking data is captured using the one or more sensing components 302. In this regard, in some embodiments, the one or more sensing components 302 include one or more eye tracking sensors 302A. In some embodiments, the one or more eye tracking sensors 302A are configured to capture and/or tracking eye movements of the user 104, such as during a motion event. For example, the one or more eye tracking sensors 302A may include a lidar component configured to capture and/or track eye movements of the user 104. As another example, the one or more eye tracking sensors 302A may include an optical component (e.g., a lens) configured to capture and/or track eye movements of the user 104. As another example, the one or more eye tracking sensors 302A may include a camera component configured to capture and/or track eye movements of the user 104.

In some embodiments, the head mounted display 102 is configured to receive external data. In some embodiments, external data includes one or more items of data representative and/or indicative of the user 104 when the user 104 is using the head mounted display 102 that is captured by one or more external sensing components 304. In some embodiments, the head mounted display 102 is configured to receive external data during and/or after a motion event. In some embodiments, the one or more external sensing components 304 are external to the head mounted display 102 and are communicatively coupled to the head mounted display 102. For example, the one or more external sensing components 304 may be disposed in the environment surrounding the user 104. In this regard, in some embodiments, the one or more external sensing components 304 may include a camera configured to capture and/or track the user 104 when the user 104 is using the head mounted display 102. Additionally, or alternatively, the one or more external sensing components 304 may include an infrared sensor configured to capture and/or track the user 104 when the user 104 is using the head mounted display 102. Additionally, or alternatively, the one or more external sensing components 304 may include a lidar component configured to capture and/or track the user 104 when the user 104 is using the head mounted display 102. Additionally, or alternatively, the one or more external sensing components 304 may include a radar component configured to capture and/or track the user 104 when the user 104 is using the head mounted display 102.

In some embodiments, the head mounted display 102 is configured to generate scene stability adjustment data. In some embodiments, scene stability adjustment data includes one or more items of data representative and/or indicative of an estimated position change of an eye gaze of the user 104 during and/or due to a motion event. Additionally, or alternatively, scene stability adjustment data includes one or more items of data representative and/or indicative of an estimated position change of the head mounted display 102 during and/or due to a motion event.

In some embodiments, scene stability adjustment data is generated by applying head mounted display motion data to a scene motion stabilization model 314. Additionally, or alternatively, scene stability adjustment data is generated by applying external data to the scene motion stabilization model 314. In some embodiments, the scene motion stabilization model 314 is a data entity that describes parameters, hyper-parameters, and/or defined operations of a rules-based and/or machine learning model that is configured to generate scene stability adjustment data. In this regard, in some embodiments, the scene motion stabilization model 314 is configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In this regard, for example, the scene motion stabilization model 314 is configured to generate scene stability adjustment data by determining an eye gaze change of the user 104 and/or a position change of the head mounted display 102 due to a motion event using head mounted display motion data and/or external data. In some embodiments, the scene motion stabilization model 314 includes a vestibulo-ocular reflex model.

In some embodiments, the scene motion stabilization model 314 is configured to perform a drift correction operation. For example, the scene motion stabilization model 314 may be configured to perform a drift correction operation to account for inertial measurement unit drift. In this regard, in some embodiments, the scene motion stabilization model 314 may be configured to perform a drift correction operation using a magnetometer. In some embodiments, the scene motion stabilization model 314 is stored in and/or operated by the operations component 312.

In some embodiments, the head mounted display 102 is configured to generate a stabilized head mounted display scene 502. For example, the head mounted display 102 may be configured to generate the stabilized head mounted display scene 502 using the operations component 312. In some embodiments, the stabilized head mounted display scene 502 is generated based on scene stability adjustment data and/or head mounted display scene data. In this regard, in some embodiments, the stabilized head mounted display scene 502 includes one or more visual representations associated with the one or more activities that are being performed using the head mounted display 102. For example, the stabilized head mounted display scene 502 may include one or more visual representations associated with one or more navigational activities. As another example, the stabilized head mounted display scene 502 may include one or more visual representations associated with one or more informational activities. As another example, the stabilized head mounted display scene 502 may include one or more visual representations associated with one or more interactive activities. As another example, the stabilized head mounted display scene 502 may include one or more visual representations associated with one or more assembly activities. As another example, the stabilized head mounted display scene 502 may include one or more visual representations associated with one or more maintenance activities. As another example, the stabilized head mounted display scene 502 may include one or more visual representations associated with one or more medical activities. As another example, the stabilized head mounted display scene 502 may include one or more visual representations associated with one or more repair activities.

In some embodiments, the stabilized head mounted display scene 502 is associated with a stabilized rendering position. In some embodiments, the stabilized head mounted display scene 502 is rendered to the head mounted display interface 400 such that the stabilized head mounted display scene 502 is positioned at the stabilized rendering position on the head mounted display interface 400. In this regard, in some embodiments, the stabilized rendering position is a position on the head mounted display interface 400 at which the stabilized head mounted display scene 502 is displayed and/or located on the head mounted display interface 400.

In some embodiments, the head mounted display 102 is configured to process the stabilized head mounted display scene 502 using one or more image processing techniques. For example, the head mounted display 102 is configured to process the stabilized head mounted display scene 502 using one or more image processing techniques that include image cropping. As another example, the head mounted display 102 is configured to process the stabilized head mounted display scene 502 using one or more image processing techniques that include image shifting. As another example, the head mounted display 102 is configured to process the stabilized head mounted display scene 502 using one or more image processing techniques that include image rotation.

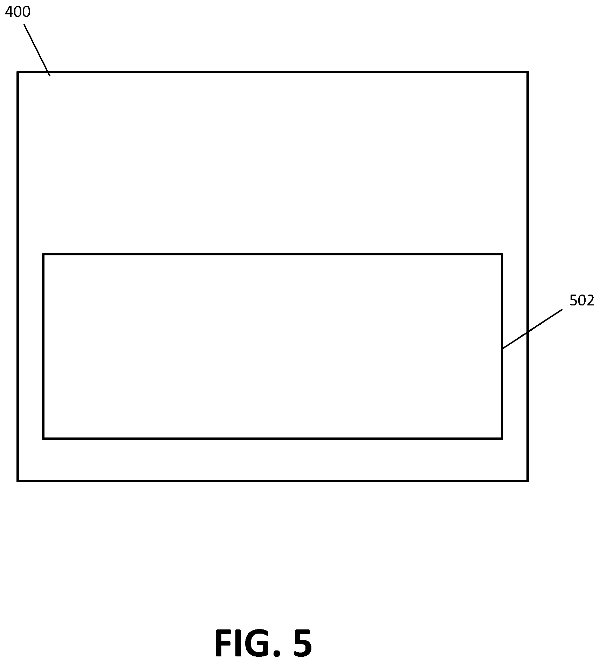

In some embodiments, the head mounted display 102 is configured to cause the stabilized head mounted display scene 502 to be rendered to the head mounted display interface 400, such as illustrated in FIG. 5. In some embodiments, the head mounted display 102 is configured to cause the stabilized head mounted display scene 502 to be rendered to the head mounted display interface 400 in response to processing the stabilized head mounted display scene 502 using one or more image processing techniques. In some embodiments, the head mounted display 102 is configured to cause the stabilized head mounted display scene 502 to be rendered to the head mounted display interface 400 in response to generating the stabilized head mounted display scene 502. In this regard, in some embodiments, the head mounted display may be configured to skip and/or delay processing the stabilized head mounted display scene 502 using one or more image processing techniques.

In some embodiments, the head mounted display interface 400 is provided on the display panel 316 of the head mounted display 102. In this regard, for example, the user 104 may be able to view the stabilized head mounted display scene 502 via the display panel 316. In some embodiments, the stabilized head mounted display scene 502 is rendered to the head mounted display interface 400 such that the stabilized head mounted display scene 502 is positioned at the stabilized rendering position on the head mounted display interface 400. Said differently, for example, by accounting for a motion event, the head mounted display 102 is configured to ensure that the one or more visual representations associated with the one or more activities that are being performed using the head mounted display 102 are presented in a stable manner despite movements of the user 104, movements of the head mounted display 102, movements of the eyes of the user 104, and/or the like.

### Example Methods

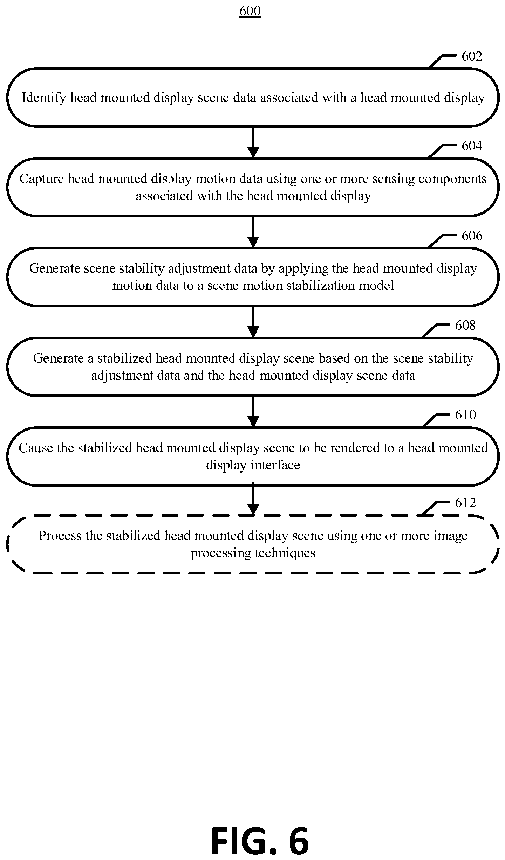

Referring now to FIG. 6, a flowchart providing an example method 600 is illustrated. In this regard, FIG. 6 illustrates operations that may be performed by head mounted display 102 and/or one or more components of the head mounted display 102. In some embodiments, the method 600 includes operations for generating a stabilized head mounted display scene and/or causing the stabilized head mounted display scene to be rendered to a head mounted display interface, as described above. In some embodiments, the example method 600 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 includes identifying head mounted display scene data. As described above, in some embodiments, head mounted display scene data includes one or more items of data representative and/or indicative of the head mounted display scene. In this regard, for example, head mounted display scene data may include one or more items of data representative and/or indicative of the visual representations of the one or more activities that are being performed using the head mounted display.

In some embodiments, identifying head mounted display scene data includes the head mounted display being configured to receive head mounted display scene data. For example, the head mounted display may be configured to receive head mounted display scene data from the display panel. As another example, the head mounted display may be configured to receive head mounted display scene data from one or more external data sources (e.g., an external database). As another example, the head mounted display may be configured to receive head mounted display scene data from one or more other devices communicatively coupled to the head mounted display. As another example, the head mounted display may be configured to receive head mounted display scene data from the user.

In some embodiments, identifying head mounted display scene data includes the head mounted display being configured to generate head mounted display scene data. For example, the head mounted display may be configured to generate head mounted display scene data using the one or more sensing components and/or the operations component. As another example, the head mounted display may be configured to generate head mounted display scene data using head mounted display operations data.

As shown in block 604, the method 600 includes capturing head mounted display motion data using one or more sensing components associated with a head mounted display. As described above, in some embodiments, head mounted display motion data includes one or more items of data representative of and/or indicative of a motion event associated with the head mounted display. In some embodiments, a motion event is an event in which the head mounted display is moved when it is being used by the user. In this regard, for example, a motion event may be an event in which the head mounted display is associated with acceleration motion (e.g., motion in an X, Y, and/or Z axis) and/or angular motion (e.g., azimuth, elevation, and/or roll motion) when it is being used by the user. Additionally, or alternatively, a motion event is an event in which the user moves when the user is using the head mounted display. In this regard, for example, a motion event may be an event in which the user is associated with acceleration motion (e.g., motion in an X, Y, and/or Z axis) and/or angular motion (e.g., azimuth, elevation, and/or roll motion) when the user is using the head mounted display. In some embodiments, head mounted display motion data is captured using the one or more sensing components.

In some embodiments, the head mounted display motion data includes surrounding environment data. In some embodiments, surrounding environment data includes one or more items of data representative and/or indicative of an environment surrounding the user. In some embodiments, surrounding environment data includes one or more items of data representative and/or indicative of an environment surrounding the user during a motion event. For example, surrounding environment data may include one or more items of data representative of and/or indicative of a room in which the user is located when using the head mounted display. As another example, surrounding environment data may include one or more items of data representative and/or indicative of one or more objects near the user when the user is using the head mounted display.

In some embodiments, surrounding environment data is captured using the one or more sensing components. In this regard, in some embodiments, the one or more sensing components include one or more surrounding environment sensors. In some embodiments, the one or more surrounding environment sensors are configured to capture and/or track the environment surrounding the user, such as during a motion event. For example, the one or more surrounding environment sensors may include a camera component configured to capture and/or track an environment surrounding the user. As another example the one or more surrounding environment sensors may include a lidar component configured to capture and/or track an environment surrounding the user. As another example, the one or more surrounding environment sensors may include a depth component (e.g., a true depth camera) configured to capture and/or track an environment surrounding the user. As another example, the one or more surrounding environment sensors may include a microphone component configured to capture and/or track an environment surrounding the user. As another example, the one or more surrounding environment sensors may include a gyroscope component configured to capture and/or track an environment surrounding the user. As another example, the one or more surrounding environment sensors may include an accelerometer component configured to capture and/or track an environment surrounding the user. As another example, the one or more surrounding environment sensors may include an inertial measurement unit (IMU) component configured to capture and/or track an environment surrounding the user. As another example, the one or more surrounding environment sensors may include a radar component configured to capture and/or track an environment surrounding the user (e.g., a millimeter wave-based radar).

In some embodiments, the head mounted display motion data includes user input and movement data. In some embodiments, user input and movement data includes one or more items of data representative and/or indicative of inputs and movements associated with the user. For example, user input and movement data includes one or more items of data representative and/or indicative of inputs provided by the user and/or movements made by the user. In some embodiments, user input and movement data includes one or more items of data representative and/or indicative of inputs and movements associated with the user during a motion event. For example, user input and movement data may include one or more items of data representative of and/or indicative of inputs and movements associated with the user when using the head mounted display. In this regard, for example, user input and movement data may include one or more items of data representative of and/or indicative of inputs and movements associated with the user when using the head mounted display to perform a maintenance activity.

In some embodiments, user input and movement data is captured using the one or more sensing components. In this regard, in some embodiments, the one or more sensing components include one or more user input and movement sensors. In some embodiments, the one or more user input and movement sensors are configured to capture and/or track inputs and movements of the user, such as during a motion event. For example, the one or more user input and movement sensors may include a controller component configured to capture and/or track inputs and movements of the user. In this regard, for example, the controller component may include a handheld devices with buttons, triggers, and joysticks for interacting with virtual objects, visual representations, and/or the like rendered in the head mounted display scene. As another example, the one or more user input and movement sensors may include a gesture recognition component configured to capture and/or track inputs and movements of the user. In this regard, for example, the gesture recognition component may be configured to recognize hand gestures or movements made be the user. As another example, the one or more user input and movement sensors may include a microphone component configured to capture and/or track inputs and movements of the user. In this regard, for example, the microphone component may enable the user to perform hands free interaction with the head mounted display. As another example, the one or more user input and movement sensors may include a head tracking component configured to capture and/or track inputs and movements of the head of the user. In this regard, for example, the head tracking component may include one or more gyroscopes, inertial measurement units (IMU), and/or accelerometers that track the head movements of the user in real-time. As another example, the one or more user input and movement sensors may include a positional component configured to capture and/or track inputs and movements of the user.

In some embodiments, the head mounted display motion data includes eye tracking data. In some embodiments, eye tracking data includes one or more items of data representative and/or indicative eye movements of user. In some embodiments, eye tracking data includes one or more items of data representative and/or indicative of eye movements of the user during a motion event. For example, eye tracking data may include one or more items of data representative of and/or indicative of eye movements of the user when using the head mounted display.

In some embodiments, eye tracking data is captured using the one or more sensing components. In this regard, in some embodiments, the one or more sensing components include one or more eye tracking sensors. In some embodiments, the one or more eye tracking sensors are configured to capture and/or tracking eye movements of the user, such as during a motion event. For example, the one or more eye tracking sensors may include a lidar component configured to capture and/or track eye movements of the user. As another example, the one or more eye tracking sensors may include an optical component (e.g., a lens) configured to capture and/or track eye movements of the user. As another example, the one or more eye tracking sensors may include a camera component configured to capture and/or track eye movements of the user.

In some embodiments, the head mounted display is configured to receive external data. In some embodiments, external data includes one or more items of data representative and/or indicative of the user when the user is using the head mounted display that is captured by one or more external sensing components. In some embodiments, the head mounted display is configured to receive external data during and/or after a motion event. In some embodiments, the one or more external sensing components are external to the head mounted display and are communicatively coupled to the head mounted display. For example, the one or more external sensing components may be disposed in the environment surrounding the user. In this regard, in some embodiments, the one or more external sensing components may include a camera configured to capture and/or track the user when the user is using the head mounted display. Additionally, or alternatively, the one or more external sensing components may include an infrared sensor configured to capture and/or track the user when the user is using the head mounted display. Additionally, or alternatively, the one or more external sensing components may include a lidar component configured to capture and/or track the user when the user is using the head mounted display. Additionally, or alternatively, the one or more external sensing components may include a radar component configured to capture and/or track the user when the user is using the head mounted display.

As shown in block 606, the method 600 includes generating scene stability adjustment data by applying the head mounted display motion data to a scene motion stabilization model. As described above, in some embodiments, scene stability adjustment data includes one or more items of data representative and/or indicative of an estimated position change of an eye gaze of the user during and/or due to a motion event. Additionally, or alternatively, scene stability adjustment data includes one or more items of data representative and/or indicative of an estimated position change of the head mounted display during and/or due to a motion event.

In some embodiments, scene stability adjustment data is generated by applying head mounted display motion data to a scene motion stabilization model. Additionally, or alternatively, scene stability adjustment data is generated by applying external data to the scene motion stabilization model. In some embodiments, the scene motion stabilization model is a data entity that describes parameters, hyper-parameters, and/or defined operations of a rules-based and/or machine learning model that is configured to generate scene stability adjustment data. In this regard, in some embodiments, the scene motion stabilization model is configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In this regard, for example, the scene motion stabilization model is configured to generate scene stability adjustment data by determining an eye gaze change of the user and/or a position change of the head mounted display due to a motion event using head mounted display motion data and/or external data. In some embodiments, the scene motion stabilization model includes a vestibulo-ocular reflex model.

In some embodiments, the scene motion stabilization model is configured to perform a drift correction operation. For example, the scene motion stabilization model may be configured to perform a drift correction operation to account for inertial measurement unit drift. In this regard, in some embodiments, the scene motion stabilization model may be configured to perform a drift correction operation using a magnetometer. In some embodiments, the scene motion stabilization model is stored in and/or operated by the operations component.

As shown in block 608, the method 600 includes generating a stabilized head mounted display scene based on the scene stability adjustment data and the head mounted display scene data. As described above, in some embodiments, the head mounted display may be configured to generate the stabilized head mounted display scene using the operations component. In some embodiments, the stabilized head mounted display scene is generated based on scene stability adjustment data and/or head mounted display scene data. In this regard, in some embodiments, the stabilized head mounted display scene includes one or more visual representations associated with the one or more activities that are being performed using the head mounted display. For example, the stabilized head mounted display scene may include one or more visual representations associated with one or more navigational activities. As another example, the stabilized head mounted display scene may include one or more visual representations associated with one or more informational activities. As another example, the stabilized head mounted display scene may include one or more visual representations associated with one or more interactive activities. As another example, the stabilized head mounted display scene may include one or more visual representations associated with one or more assembly activities. As another example, the stabilized head mounted display scene may include one or more visual representations associated with one or more maintenance activities. As another example, the stabilized head mounted display scene may include one or more visual representations associated with one or more medical activities. As another example, the stabilized head mounted display scene may include one or more visual representations associated with one or more repair activities.

In some embodiments, the stabilized head mounted display scene is associated with a stabilized rendering position. In some embodiments, the stabilized head mounted display scene is rendered to the head mounted display interface such that the stabilized head mounted display scene is positioned at the stabilized rendering position on the head mounted display interface. In this regard, in some embodiments, the stabilized rendering position is a position on the head mounted display interface at which the stabilized head mounted display scene is displayed and/or located on the head mounted display interface.

As shown in block 610, the method 600 includes causing the stabilized head mounted display scene to be rendered to a head mounted display interface. As described above, the head mounted display is configured to cause the stabilized head mounted display scene to be rendered to the head mounted display interface in response to processing the stabilized head mounted display scene using one or more image processing techniques. In some embodiments, the head mounted display is configured to cause the stabilized head mounted display scene to be rendered to the head mounted display interface in response to generating the stabilized head mounted display scene. In this regard, in some embodiments, the head mounted display may be configured to skip and/or delay processing the stabilized head mounted display scene using one or more image processing techniques.

In some embodiments, the head mounted display interface is provided on the display panel of the head mounted display. In this regard, for example, the user may be able to view the stabilized head mounted display scene via the display panel. In some embodiments, the stabilized head mounted display scene is rendered to the head mounted display interface such that the stabilized head mounted display scene is positioned at the stabilized rendering position on the head mounted display interface. Said differently, for example, by accounting for a motion event, the head mounted display is configured to ensure that the one or more visual representations associated with the one or more activities that are being performed using the head mounted display are presented in a stable manner despite movements of the user, movements of the head mounted display, movements of the eyes of the user, and/or the like.

As shown in optional block 612, the method 600 optionally includes processing the stabilized head mounted display scene using one or more image processing techniques. As described above, for example, the head mounted display is configured to process the stabilized head mounted display scene using one or more image processing techniques that include image cropping. As another example, the head mounted display is configured to process the stabilized head mounted display scene using one or more image processing techniques that include image shifting. As another example, the head mounted display is configured to process the stabilized head mounted display scene using one or more image processing techniques that include image rotation.

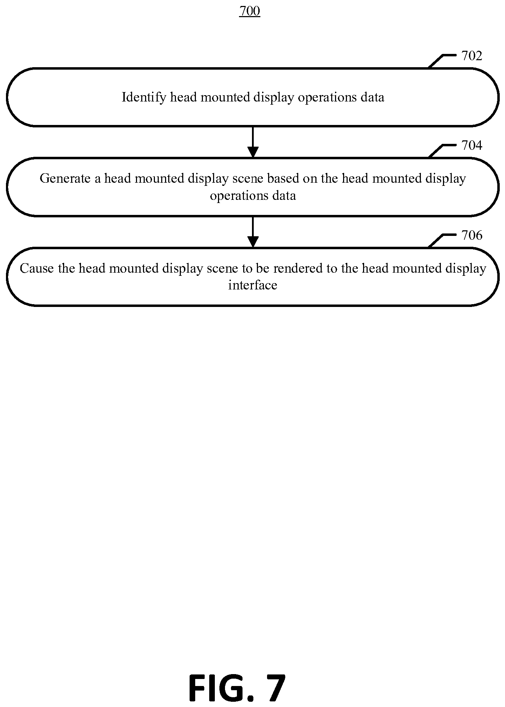

Referring now to FIG. 7, a flowchart providing an example method 700 is illustrated. In this regard, FIG. 7 illustrates operations that may be performed by head mounted display 102 and/or one or more components of the head mounted display 102. In some embodiments, the method 700 includes operations for generating a head mounted display scene and/or causing the head mounted display scene to be rendered to a head mounted display interface, as described above. In some embodiments, the example method 700 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 700.

As shown in block 702, the method 700 includes identifying head mounted display operations data. As described above, in some embodiments, head mounted display operations data includes one or more items of data representative and/or indicative of one or more activities that are being performed using the head mounted display. In this regard, for example, head mounted display operations data may include one or more items of data representative and/or indicative of navigational activities that are being performed using the head mounted display (e.g., viewing an interactive map using the head mounted display). As another example, head mounted display operations data may include one or more items of data representative and/or indicative of informational activities that are being performed using the head mounted display (e.g., watching a video using the head mounted display). As another example, head mounted display operations data may include one or more items of data representative and/or indicative of assembly activities that are being performed using the head mounted display (e.g., assembly an item from one or more components using instructions provided by the head mounted display).

As another example, head mounted display operations data may include one or more items of data representative and/or indicative of maintenance activities that are being performed using the head mounted display (e.g., performing maintenance on an item using instructions provided by the head mounted display). As another example, head mounted display operations data may include one or more items of data representative and/or indicative of medical activities that are being performed using the head mounted display (e.g., performing a medical procedure using instructions provided by the head mounted display). As another example, head mounted display operations data may include one or more items of data representative and/or indicative of repair activities that are being performed using the head mounted display (e.g., repairing an item using instructions provided by the head mounted display). Said differently, in some embodiments, the one or more activities that are being performed using the head mounted display are associated with a real-world environment, a virtual reality environment, an augmented reality environment, a mixed reality environment, and/or the like through which performance of an activity is facilitated.

In some embodiments, identifying head mounted display operations data includes the head mounted display being configured to receive the head mounted display operations data. For example, the head mounted display may be configured to receive head mounted display operations data from one or more external data sources (e.g., an external database). As another example, the head mounted display may be configured to receive head mounted display operations data from one or more other devices communicatively coupled to the head mounted display. As another example, the head mounted display may be configured to receive head mounted display operations data from the user. In some embodiments, identifying head mounted display operations data includes the head mounted display being configured to generate head mounted display operations data. For example, the head mounted display may be configured to generate head mounted display operations data using one or more sensing components of the head mounted display.

As shown in block 704, the method 700 includes generating a head mounted display scene based on the head mounted display operations data. As described above, in some embodiments, the head mounted display scene includes one or more visual representations associated with the one or more activities that are being performed using the head mounted display. For example, the head mounted display scene may include one or more visual representations associated with one or more navigational activities. As another example, the head mounted display scene may include one or more visual representations associated with one or more informational activities. As another example, the head mounted display scene may include one or more visual representations associated with one or more interactive activities. As another example, the head mounted display scene may include one or more visual representations associated with one or more assembly activities. As another example, the head mounted display scene may include one or more visual representations associated with one or more maintenance activities. As another example, the head mounted display scene may include one or more visual representations associated with one or more medical activities. As another example, the head mounted display scene may include one or more visual representations associated with one or more repair activities.

As shown in block 706, the method 700 includes causing the head mounted display scene to be rendered to the head mounted display interface. As described above, in some embodiments, the head mounted display interface is provided on a display panel of the head mounted display. In this regard, for example, the user may be able to view the head mounted display scene via the display panel. In some embodiments, the head mounted display scene is associated with an original rendering position. In some embodiments, the head mounted display scene is rendered to the head mounted display interface such that the head mounted display scene is positioned at the original rendering position on the head mounted display interface. In this regard, in some embodiments, the original rendering position is a position on the head mounted display interface at which the head mounted display scene is displayed and/or located on the head mounted display interface. In some embodiments, the head mounted display is configured such that the head mounted display interface is visible to the user when the user is wearing the head mounted display.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
identifying head mounted display scene data associated with a head mounted display;
capturing head mounted display motion data using one or more sensing components associated with the head mounted display;
generating scene stability adjustment data by applying the head mounted display motion data to a scene motion stabilization model;
generating a stabilized head mounted display scene based on the scene stability adjustment data and the head mounted display scene data; and
causing the stabilized head mounted display scene to be rendered to a head mounted display interface, wherein the stabilized head mounted display scene is rendered at a stabilized rendering position on the head mounted display interface.

2. The method of claim 1, wherein the head mounted display interface is provided on a display panel of the head mounted display.

3. The method of claim 1, wherein the head mounted display motion data comprises surrounding environment data representative of an environment surrounding a user of the head mounted display during a motion event.

4. The method of claim 1, wherein the head mounted display motion data comprises user input and movement data representative of an input by a user of the head mounted display during a motion event.

5. The method of claim 1, wherein the head mounted display motion data comprises eye tracking data representative of movement of an eye of a user of the head mounted display during a motion event.

6. The method of claim 1, wherein generating the scene stability adjustment data further comprises:
applying external data to the scene motion stabilization model.

7. The method of claim 1, wherein the scene motion stabilization model is configured to:
perform a drift correction operation.

8. The method of claim 1, wherein the scene motion stabilization model comprises a vestibulo-ocular reflex model.

9. The method of claim 1, further comprising:
processing the stabilized head mounted display scene using one or more image processing techniques.

10. The method of claim 1, wherein the one or more sensing components include one or more of a gesture recognition component, a head tracking component, or a positional component.

11. The method of claim 1, wherein at least one of the one or more sensing components is external to the head mounted display.

12. The method of claim 1, further comprising:
identifying head mounted display operations data;
generating a head mounted display scene based on the head mounted display operations data; and
causing the head mounted display scene to be rendered to the head mounted display interface, wherein the head mounted display scene is rendered at an original rendering position on the head mounted display interface.

13. The method of claim 1, wherein the scene stability adjustment data is representative of an estimated position change of an eye gaze of a user of the head mounted display.

14. An apparatus comprising memory and one or more processors communicatively coupled to the memory, the one or more processors configured to:
identify head mounted display scene data associated with a head mounted display;
capture head mounted display motion data using one or more sensing components associated with the head mounted display;
generate scene stability adjustment data by applying the head mounted display motion data to a scene motion stabilization model;
generate a stabilized head mounted display scene based on the scene stability adjustment data and the head mounted display scene data; and
cause the stabilized head mounted display scene to be rendered to a head mounted display interface.

15. A computer program product comprising at least one non-transitory computer-readable storage medium having computer program code stored thereon that, in execution with at least one processor, configures the computer program product for:
identifying head mounted display scene data associated with a head mounted display;
capturing head mounted display motion data using one or more sensing components associated with the head mounted display;
generating scene stability adjustment data by applying the head mounted display motion data to a scene motion stabilization model;
generating a stabilized head mounted display scene based on the scene stability adjustment data and the head mounted display scene data; and
causing the stabilized head mounted display scene to be rendered to a head mounted display interface.
